# EUROPÄISCHE PATENTSCHRIFT

(11) **EP 1 423 960 B1**
(45) Veröffentlichungstag und Bekanntmachung des Hinweises auf die Patenterteilung: **04.03.2015**
(21) Anmeldenummer: 02760149.1
(22) Anmeldetag: 02.09.2002
(51) Int. Cl.: H04L 29/06

(54) **VORRICHTUNG UND VERFAHREN ZUR AUTOMATISCHEN BENUTZERPROFIL-KONFIGURATION**
DEVICE AND METHOD FOR THE AUTOMATIC CONFIGURATION OF USER PROFILES
DISPOSITIF ET PROCEDE DE CONFIGURATION AUTOMATIQUE DE PROFILS D'UTILISATEURS

(30) Priorität: 07.09.2001 DE 10144023
(43) Veröffentlichungstag der Anmeldung: 02.06.2004
(73) Patentinhaber: Nokia Solutions and Networks GmbH & Co. KG, 81541 Munich (DE)
(72) Erfinder: PREHOFER, Christian, 81477 München (DE)
(74) Vertreter: Weidel, Gottfried
(86) Internationale Anmeldenummer: PCT/DE2002/003224
(87) Internationale Veröffentlichungsnummer: WO 2003/026246

(56) Entgegenhaltungen:
- EP-A- 0 811 942
- WO-A-00/14640
- WO-A-99/49643
- US-A- 6 161 125
- US-A1- 2001 011 341

## Beschreibung

Die Erfindung betrifft eine Vorrichtung zur automatischen Konfiguration von Benutzerprofilen bei Endgeräten in einem Telekommunikations- und /oder Datennetz mit einer Vielzahl von Anwendungsservern, wobei ein sogenannter Profilserver als zentraler Server zur Verwaltung, Speicherung und Aktualisierung der Benutzerprofile eingesetzt wird.

In einem Netzwerk muß sich bei vielen Anwendungen ein Benutzer zunächst bei einem Anwendungsserver anmelden und authentifizieren, um nach einer entsprechenden Autorisation diese nutzen zu können. Bei der Authentifizierung gibt der Benutzer seine Identität zu Erkennen, der Anmeldungsserver stellt dann fest, ob eine Zugriffsberechtigung vorliegt oder nicht. Eine Authentifizierung ist notwendig, um persönliche Daten des Benutzers auf dem Netz vor einem unberechtigtem Zugriff zu schützen. Eine Freigabe erfolgt, wenn sich der Benutzer richtig identifiziert hat, d.h. wenn seine benutzerspezifischen Angaben mit Eingaben in einer speziellen Benutzerdatenbank übereinstimmen. In der Pra-xis wird die Authentifizierung meistens durch eine Kennwortabfrage realisiert. Ein zur Authentifizierung benötigter Datensatz (Account) besteht in der Regel aus einem eindeutigen Benutzerkennzeichen (User-ID, Benutzername) und einem personengebundenem, nicht übertragbarem Wissen (Kennwort). Aufgabe einer sogenannten Benutzerverwaltung ist es, die zur Identifizierung von Anwendungsbenutzern benötigten Daten zu speichern. Die Benutzerverwaltung sollte möglichst zentral, sicher und für die betreffenden Dienste offen angeordnet sein. Sie kann entweder durch eine lokale, zum Betriebssystem gehörende Benutzerdatenbank des Anwendungsservers, durch eine systemunabhängige Datenbank oder durch einen externen Authentifizierungs-Server (z.B. RADIUS-Server oder POP-Server) realisiert werden. Welche der genannten Varianten gewählt wird, ist vom Benutzerkreis und anzubietenden Dienstspektrum abhängig.

Es sind aber auch Ausführungen bekannt, bei denen die Authentifizierung der Benutzer direkt beim Login in das Netz durch einen Authentifizierungs-Server in Kombination mit einer lokalen, dem Authentifizierungs-Server untergeordneten Benutzerdatenbank erfolgen. Diese Datenbank existiert eigenständig, d.h. eine Aktualisierung, etwa durch Abgleichen mit einer zentralen Beutzerdatenbank, kann nur von Hand geschehen, so daß jedes einzelne Benutzerprofil in der Benutzerdatenbank des Authentifizierungs-Servers aktualisiert werden muß und Paßwörter nicht automatisch übernommen werden.

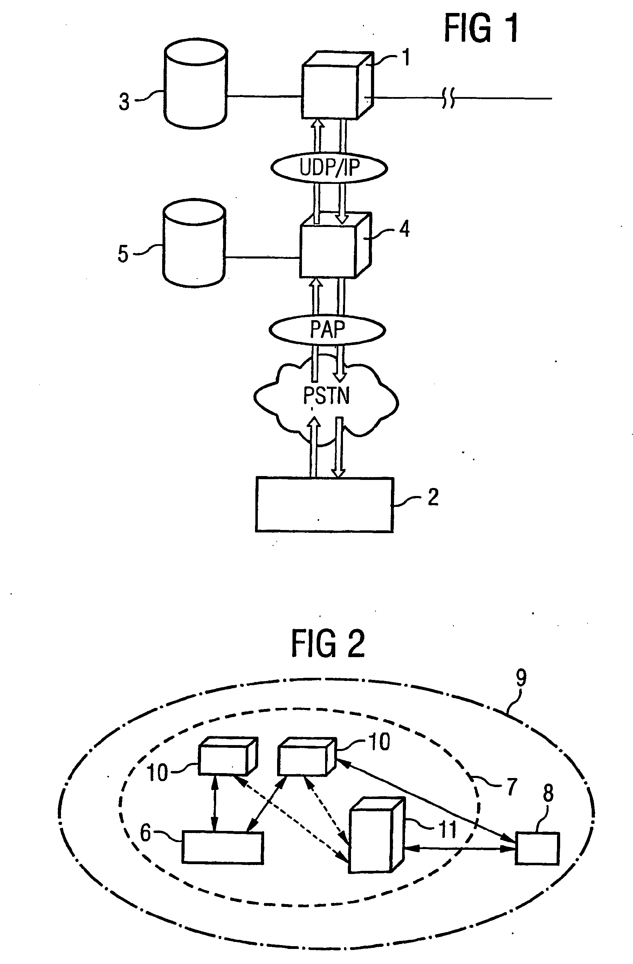

Neben den beschriebenen Ausführungen sind ferner Serversysteme bekannt, bei denen eine automatische Aktualisierung von persönlichen Benutzerdaten erfolgt. Ein Beispiel hierfür ist das Serversystem RADIUS (Remote Authentication Dial-In User Server), welches im folgenden anhand Fig. 1 erläutert wird.

Fig. 1 zeigt einen sogenannten RADIUS-Server 1 in einem Netz implementiert und im Hintergrund arbeitend. Zur Authentifizierung eines Benutzers 2, der sich über ein Telefonnetz (hier PSTN) einloggt, kann über den RADIUS-Server 1 ein Zugriff auf eine zentrale Paßwort-Datenbank 3 erfolgen. Dazu wird die entsprechende Paßwort-Datei ausgelesen und über den RADIUS-Server 1 an einen Authentifizierungs-Server 4 übermittelt. Die in der Paßwort-Datei enthaltene Information kann vollständig im Server 4 zur Benutzer-Authentifizierung verwendet werden. Damit ist es möglich, ganze Benutzerbereiche mit relativ geringem Aufwand in die Authentifizierungs-Routine zu integrieren. Der RADIUS-Server 1 arbeitet dabei im Hintergrund und kommuniziert mit dem Authentifizierungs-Server 4 mittels eines geeigneten Übertragungsprotokolls (z.B. UDP/IP). Kann der Authentifizierungs-Server 4 den Benutzer 2 nicht aufgrund seiner lokalen Information, die in einer lokalen Datenbank 5 gespeichert ist, authentifizieren, kontaktiert er den RADIUS-Server 1. Ist der Benutzer 2 in dessen Datenbank 3 enthalten, wird die Paßwortabfrage über den Authentifizierungs-Server 4 gestartet, hierzu wird ein Standard-Übertragungsprotokoll (z.B. PAP) benutzt. Zusätzlich zur Paßwortabfrage kann der RADIUS-Server 1 weitere Informationen an den Authentifizierungs-Server 4 weitergeben, wie etwa das zu verwendende Übertragungsprotokoll.

Mit der Entwicklung von leistungsfähigeren, mobilen, vernetzten Endgeräten (z.B. Handy, PDA), ist es im zunehmenden Maße üblich, daß von verschiedenen Endgeräten (mobil und stationär) aus ein Benutzer auf Applikationen, die von Anwendungsservern in einem Netz angeboten werden, zugreift. Bei der Verwendung von mobilen Endgeräten ist es, aufgrund der in der Regel eingeschränkten Bedienmöglichkeiten (z.B. keine Standard-Tastatur), wichtig, sowohl die Authentifizierungs-Routine als auch die Benutzung der Anwendungen einfach bzw. entsprechend angepaßt zu gestalten. Bei den heute zur Verfügung stehenden Anmeldekonzepten und Authentifizierungs-Routinen wird jedoch in der Regel nicht unterschieden, ob der Benutzer mit einem mobilen oder einem stationären Endgerät ausgestattet ist.

Neben einer begrenzten Eingabemöglichkeit ist oft auch eine geringe Speicherplatzkapazität eine Einschränkung bei mobilen Endgeräten. Bei einem Aufruf eines Anwendungsprogramms, welches von einem Anwendungsserver angeboten wird, muß auf dem Endgerät üblicherweise zunächst ein Teilprogramm fest installiert werden. Dieser sogenannte Client-Teil wird üblicherweise beim ersten Aufrufen des Anwendungsprogramms komplett, d.h. als gesamte Client-Applikation in allen zur Verfügung stehenden Varianten, auf das Endgerät übertragen und als Softwarekomponente dauerhaft installiert. Tatsache ist aber, daß bei der Installation des kompletten Client-Teils oft wesentlich mehr Speicherplatz auf dem Endgerät belegt wird, als zur einfachen Durchführung des Anwendungsprogramms eigentlich notwendig wäre, da beispielsweise verschiedene Sprachversionen, Farbeinstellungen etc. mit installiert werden. Besonders mobile Endgeräten haben oft nicht genügend Speicherplatz zur Verfügung, so daß hier unter Umständen gewisse Anwendungsprogramme nicht oder nur eingeschränkt laufen können.

WO99/49643A offenbart zwar ein Verfahren zur Aktivierung und Deaktivierung von Netzwerkdiensten für einen Teilnehmer über einen Profilserver, zeigt aber keine Anpassung der Anwendungsprogramme an das Endgerät.

Der Erfindung liegt daher die Aufgabe zugrunde, für mobile, vernetzte Endgeräte die gesamte Nutzung von Anwendungsprogrammen, einschließlich des Logins auf den erforderlichen Anwendungsservern, möglichst zu vereinfachen und an das Endgerät mit dem zugehörigen Benutzer anzupassen.

Dieses technische Problem wird durch eine Vorrichtung nach Patentanspruch 1 gelöst. Ein wesentlicher Punkt der Erfindung liegt darin, daß ein Profilserver als zentraler Server eine dynamische und benutzerbezogene Informationsbasis zur Benutzerverwaltung, insbesondere zur Authentifizierung und Verwaltung von benutzerspezifischen Einstellungen, die von Anwendungsprogrammen benötigt werden, zur Verfügung stellt. Zusätzlich übernimmt der Profilserver die Verwaltung von sogenannten Cache-Dateien, dabei handelt es sich um Dateien, auf die der Benutzer standardmäßig zugreift. Letztendlich überträgt der Benutzer nur die notwendigen Daten für die bzw. mit der Anwendung auf sein mobiles Gerät.

Hierzu werden zuvor die Benutzerprofile von allen im Netz verfügbaren Anwendungsservern an den Profilserver übermittelt. Der Profilserver bietet dann den Dienst an, die an den Benutzer entsprechend angepaßten Anwendungen und Konfigurationsdaten auf sein Endgerät zu übermitteln. Durch einen entsprechenden Synchronisationsvorgang aktualisiert der Profilserver des weiteren automatisch die übermittelten Benutzerprofile.

Ferner ist der Profilserver so ausgebildet, daß über ihn die Benutzeridentitäten eines Benutzers in verschiedenen Netzen aufeinander abgebildet werden können. Ein Benutzer mit einer bestimmten Kennung im Festnetz bzw. dem Internet (Festnetz-Telefonnummer bzw. Internetadresse) und einem mobilen Gerät, etwa einem Handy mit einer bestimmten Handynummer, die als Benutzeridentität im mobilen Netz dient, kann somit auf dem mobilen Gerät die personalisierte Software installieren, sobald der Profilserver vom Anwendungsserver die Benutzerdaten übermittelt bekommen hat.

Der Vorteil der Erfindung liegt insbesondere darin, daß der Profilserver die Zugangsberechtigungen der einzelnen Benutzer für den Zugriff auf die Anwendungsserver im Netz kennt und die Benutzerkonfiguration verwaltet. Der Profilserver übernimmt den Autorisierungsvorgang und identifiziert anhand einer vom mobilen Endgeräte übermittelten Kennung, wie etwa die GSM-Telefonummer, den Benutzer mit dem zugehörigen, stationären Endgerät. Über das abgespeicherte Benutzerprofil kennt der Profilserver zum einen die Zugangsberechtigung und ferner die benutzerspezifischen Client-Teile der verschiedenen Anwendungsprogramme. Über den Profilserver wird dann nur der wirklich benötigte, personalisierte Teil einer Applikation auf das mobile Gerät des Benutzers geladen.

Ferner kann aber auch eine Autorisierung eines Benutzers von einem Anwendungsserver selbst übernommen werden. Der Anwendungsserver übermittelt im Anschluß daran dem Profilserver die benutzerspezifischen Client-Teile, welche dem Benutzer für einen späteren Zeitpunkt auf allen dem Profilserver zugängigen Netzen zu Verfügung stehen.

In einer speziellen Ausführung der Erfindung ist der Profilserver so ausgelegt, daß dieser neben der bereits oben dargestellten Verwaltung der Benutzerprofile auch die der Cache-Dateien übernimmt. Hierbei handelt es sich im wesentlichen um eine Spiegelung der Cache-Dateien zwischen dem Endgerät und dem Profilserver, so daß die Dateien, auf die standardmäßig der jeweilige Benutzer zugreift, automatisch sowohl auf dem Profilserver als auch auf dem Endgerät vorlieben. Aufgrund der Synchronisation zwischen dem Profilserver, den Anwendungsservern und den Endgeräten im Netz wird eine Änderung sowohl des Benutzerprofils als auch der Cache-Dateien eines Benutzers simultan oder spätestens beim Abmelden automatisch erfaßt und die bisher gültigen Daten aktualisiert.

Der Vorteil dieser Ausführungsform liegt darin, daß nicht nur die Beutzerprofile, sondern auch die Cache-Dateien aufeinander abgebildet werden können. Über den Profilserver wird das Endgerät eines Benutzers automatisch mit den entsprechenden benutzerspezifischen Daten und Einstellungen versorgt, so daß nicht nur auf dem mobilen Endgerät die Anwendungsprogramme dem Benutzerprofil bereits angepaßt laufen, sondern auch die häufig benutzten Dateien unabhängig vom Endgerät dem Benutzer zur Verfügung stehen. Letzteres dient zusätzlich als eine Sicherung wichtiger persönlicher Dateien.

Vorteile und Zweckmäßigkeiten der Erfindung werden im übrigen aus den Unteransprüchen sowie den Beschreibungen bevorzugter Ausführungsformen anhand der Figuren deutlich. Von diesen zeigen:
Fig. 1 eine strukturelle Darstellung des Ablaufs einer Authentifizierung eines Benutzers bei einer RADIUS-Serverstruktur als Beispiel für den Stand der Technik,
Fig. 2 eine Ausführungsform der Erfindung, bei welcher der Profilserver die Verwaltung der personalisierten Softwarekomponenten sowie die der Benutzerprofile übernimmt,
Fig. 3 eine Darstellung des prinzipiellen Ablaufes einer Authentifizierung und benutzerspezifischen Installation eines Anwendungsprogramms bei einer Ausführungsform der Erfindung,
Fig. 4 einen prinzipiellen Aufbau des Profilservers in einer Ausführungsform der Erfindung, bei der der Profilserver die Verwaltung der Benutzerprofile, der Cache-Dateien und der personalisierten Client-Programme übernimmt, und
Fig. 5 eine-Ausführungsform der Erfindung, bei der die Zugangsdaten für verschiedene Anwendungen aus Sicherheitsgründen auf einem zusätzlichen Authentifizierungs-Server gehalten werden.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Die Ausführung der Erfindung ist nicht auf die beschriebenen Ausführungsbeispiele beschränkt, sondern auch in einer Vielzahl von Varianten möglich und dem Fachmann geläufig.

In Fig. 1 wird, wie bereits in der Einleitung beschrieben, der Ablauf einer Benutzer-Authentifizierung bei einer RADIUS-Serverstruktur 1 als Beispiel für den Stand der Technik dargestellt. Ein Laden der entsprechenden, persönlichen Benutzerdaten für oder mit den jeweiligen Anwendungsprogrammen, speziell für ein mobiles Gerät 8, ist hier nicht vorgesehen. Die Authentifizierung erfolgt, unabhängig von dem Endgerät des Benutzers 2, entsprechend einer Routine, bei der eine Kennung und ein Paßwort eingegeben werden muß.

Fig. 2 stellt eine Ausführungsform der Erfindung dar, bei der ein Profilserver 11 die Verwaltung von personalisierten Applikationen und Benutzerdaten für die Installation auf einem mobilen Gerät 8 übernimmt. Als wesentliche Teile sind ein stationäres Gerät 6 eines Benutzers 2, das in einem Netzwerk 7 integriert ist, ein mobiles Gerät 8 des gleichen Benutzers 2, auf dem die gleichen Anwendungen wie auf dem stationären Gerät 6 verwendet werden und welches sich in einem mobilen Netz 9 befindet, eine Vielzahl von Anwendungsservern 10, auf denen Anwendungsprogramme laufen, wobei viele dieser Programme auch einen Client-Teil benötigen, der auf dem Endgerät 6 und 8 läuft, sowie ein Profilserver 11 zur Verwaltung von personalisierten Applikationen und Benutzerdaten gezeigt.

In Fig. 2 ist ein Szenario dargestellt, bei dem ein Benutzer 2 auf zwei Endgeräten, einem mobilen Endgerät 8 und einem stationären Endgerät 6, Anwendungsprogramme verwendet, die auf den Anwendungsservern 10 bereitgestellt werden. Ferner verwendet der Benutzer 2 in beiden Fällen für die jeweilige Applikation auf einem Anwendungsserver 10 die gleiche Kennung und die gleiche Benutzereinstellung. Bei Änderung der Daten auf einem der Endgeräte 6 bzw. 8 soll auch diese für den Zugang über das jeweils andere Gerät 8 bzw. 6 geändert werden. Die Anwendungsserver 10 sind bezüglich der Zugriffs-Autorisierung so konfiguriert, daß die Benutzerdaten (Name, Paßwort, etc.) von ihnen selbst verwaltet werden.

Das bis hierhin beschriebene Szenario entspricht einer typischen Konfiguration beispielsweise in einem Intranet mit einer Vielzahl von Anwendungsservern 10 und einem stationären 6 und mobilen 8 Endgerät eines identischen Benutzers 2.

Die Idee der vorliegenden Erfindung ist mit dem Profilserver 11 verwirklicht. Die verschiedenen Anwendungsserver 10 übermitteln hierbei die Benutzerdaten dem Profilserver 11, der die Verwaltung der Benutzerprofile übernimmt und regelmäßig die an den Benutzer 2 entsprechend angepaßten Anwendungen und Konfigurationsdaten an die Endgeräte 6 bzw. 8 des Benutzers 2 weitergibt. Bei Änderungen der Daten vom mobilen oder stationären Endgerät 8 bzw. 6 erfolgt eine entsprechende Synchronisation. Der Profilserver 11 kennt im wesentlichen die Zugangsberechtigungen der einzelnen Benutzer 2 für den Zugriff auf die Anwendungsserver 10 im Netz 7 und übernimmt den Autorisierungsvorgang bei der Anmeldung von mobilen Endgeräten 8. Anhand einer vom mobilen Endgerät 8 aus übermittelten Kennung, etwa die GSM-Telefonummer, identifiziert der Profilserver 11 den Benutzer 2 mit dem zugehörigen, stationären Endgerät 6. Über das abgespeicherte Benutzerprofil kennt der Profilserver 11 zum einen die Zugangsberechtigung und ferner die benutzerspezifischen Client-Teile der verschiedenen Anwendungsprogramme. Über den Profilserver 11 wird dann nur der wirklich benötigte, personalisierte Teil einer Applikation auf das mobile Gerät 8 des Benutzers 2 geladen.

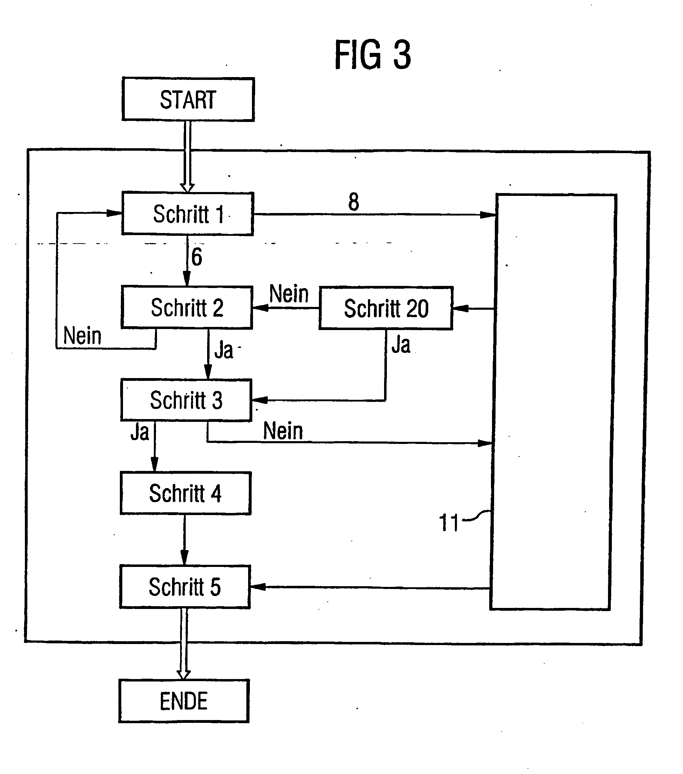

Fig. 3 stellt den prinzipielle Ablauf einer Authentifizierung und nutzerspezifischen Installation eines Anwendungsprogrammes bei einer Ausführungsform der Erfindung dar. In dem hier betrachteten Fall möchte ein Benutzer 2 auf ein Anwendungsprogramm, das auf dem Anwendungsserver 10 liegt, zugreifen. Hierzu wird zunächst der Typ (mobil oder stationär) des Endgerätes des Benutzers 2 angefragt (Schritt 1), bei einem stationären Endgerät 6 durchläuft die Authentifizierung des Benutzers 2 die in der Einleitung beschriebene Standard-Routine mit Abfragung eines Accounts etc., was in Schritt 2 erfolgt. Sollte jedoch ein mobiles Endgerät 8 vorliegen, so wird der Authentifizierungsvorgang des Benutzers 2 zu dem Profilserver 11 verwiesen, dieser übernimmt dann, z.B. über die GSM Telefonnummer, die für ein mobiles Endgerät 8 angepaßte Authentisierung (Schritt 20). Sollte der Benutzer 2 des mobilen Endgerätes 8 autorisiert sein, d.h. stimmen die Eingaben des Benutzers 2 mit den dem Profilserver 11 zur verfügung stehenden Informationen überein, wird der Vorgang zu Schritt 3 übergehen. In Schritt 3 wird geprüft, ob der Benutzer 2 die Anwendung zum ersten Mal nutzt, oder ob bereits auf ein personalisiertes Programm zurückgegriffen werden kann. Sollte letzteres der Fall sein, so wird der Benutzer 2 erneut auf den Profilserver 11 verwiesen, dieser ordnet dann dem Benutzer 2 das nutzerspezifisch angepaßte Teilprogramm der Client-Anwendung zu, welches auf das Endgerät 6 bzw. 8 geladen wird und dem Benutzer 2 dann zur Verfügung steht. Bei einer Erstbenutzung der Anwendung muß zunächst auf dem Endgerät 6 bzw. 8 eine komplette Client-Anwendung der Applikation installiert werden (Schritt 4). Danach kann der Benutzer 2 die Client-Anwendung personalisieren, beispielsweise durch eine Auswahl der Sprache oder der Farbeinstellung, und anschließend starten. Was von dem Client-Teil der Anwendung auf dem Endgerät übrig bleibt, ist das benutzerspezifisch angepaßte Teilprogramm der Client-Anwendung, welches bei der nächsten Synchronisation auf den Profilserver 11 übertragen wird und dort für eine spätere Installationen des Anwendungsprogrammes bereit liegt.

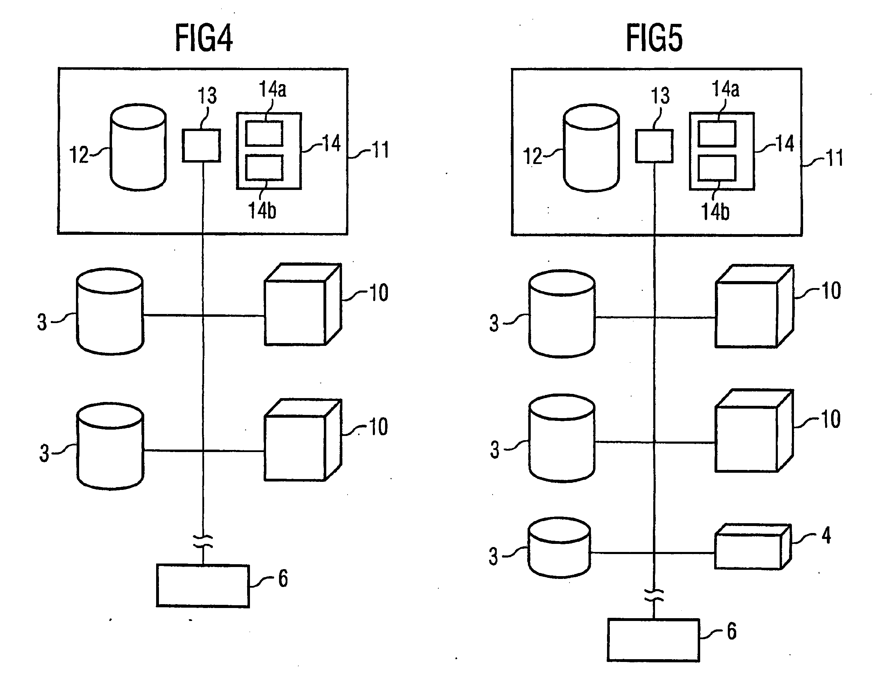

Fig. 4 zeigt einen prinzipiellen Aufbau des Profilservers 11 in einer Ausführungsform der Erfindung, bei welcher der Profilserver 11 die Verwaltung der Benutzerprofile, der Cache-Dateien und der personalisierten Client-Programme übernimmt. Der Profilserver 11 besteht im wesentlichen aus einer Profildatenbank 12 zur Speicherung von aktualisierten Benutzerdaten, Benutzerkonfigurationen, personalisierten Softwarekomponenten und Cache-Dateien, sowie einer Profilverwaltungseinheit 13 zur Verwaltung von Benutzerprofilen und von personalisierten Softwarekomponenten sowie zur Verwaltung von Cache-Dateien, und ferner aus einer Aktualisierungseinheit 14 bestehend aus einer Synchronisationseinheit 14a zur Synchronisation des Profilservers 11 mit den Anwendungsservern 10 und einer Dublizierungseinheit 14b zur Spiegelung der Benutzerprofile aller Benutzer 2 von den Anwendungsservern 10 sowie zur Spiegelung der Cache-Dateien aller Benutzer 2 von den zugehörigen Endgeräten 6 bzw. 8 auf den Profilserver 11.

Über die Aktualisierungseinheit 14 erfolgt in regelmäßigen Abständen eine Aktualisierung der in der Profildatenbank 12 abgespeicherten Benutzerprofile. Hierzu werden von den einzelnen Anwendungsservern 10 die aktuellen Profile der Benutzer 2 abgefragt und in der Profilverwaltungseinheit 13 mit den bisher geltenden, in der Profildatenbank 12 abgespeicherten Profilen verglichen. Der Vergleichsvorgang verläuft so, daß letztendlich jeweils die aktuellen Daten in der Profildatenbank 12 abgespeichert werden. Bei diesem Vorgang wird unterschieden, ob es sich um benutzerspezifische Daten (z.B. Kennung, Paßwort, etc.), um personalisierte Softwarekomponenten (z.B. bestimmte Sprachversion, Farbeinstellung, etc.), oder ob es sich um Cache-Dateien handelt.

Bei der anhand Fig. 4 dargestellten Ausführungsform der Erfindung ist es für einen Benutzer 2 möglich, sich mit einem stationären-Endgerät 6 durch eine klassische Authentifizierung auf den verschiedenen Anwendungsservern 10 anzumelden. Somit können die angebotenen Applikationen auf dem stationären Gerät 6 verwendet werden. Im weiteren Verlauf werden dem Profilserver 11 zunächst das Benutzerprofil, d.h. der für die einzelnen Anwendungsservern 10 benötigte Account und ferner die benutzerspezifisch angepaßten Programme der Client-Teile der Anwendungen übermittelt. Diese jeweils aktuellen Benutzerprofile und Softwarekomponenten werden in der Profildatenbank 12 des Profilservers 11 gespeichert. Des weiteren spiegelt der Profilserver 11 die Cache-Dateien des Benutzers 2 von dem Endgerät 6 und legt eine Kopie der Cache-Dateien in der Profildatenbank 12 an. Das gesamte System ist jetzt so konfiguriert, daß der Benutzer 2 sich mit einem mobilen Endgerät 8 über den Profilserver 11 anmelden kann. Der Profilserver 11 muß dabei dem Benutzer 2 des mobilen Endgerätes 8 (z.B. über eine GSM Telefonnummer) die Zugangsberechtigung des Benutzers 2 mit dem stationären Gerät 6 zuordnen. Im nächsten Schritt installiert dann der Profilserver 11 auf dem mobilen Endgerät 8 die personalisierte Softwarekomponenten des Client-Teils der Anwendungen sowie die Cache-Dateien, so daß der Benutzer 2 direkt vom mobilen Endgerät 8 aus, ohne eine klassische Authentifizierungs-Routine zu durchlaufen, die verschiedenen Applikationen der Anwendungsserver 10 nutzen kann.

In Fig. 5 ist eine Ausführungsform der Erfindung dargestellt, bei der die Zugangsdaten für verschiedene Anwendungen aus Sicherheitsgründen auf einem zusätzlichen Authentifizierungs-Server 4 gehalten werden. In dieser Variante funktioniert die Erfindung analog zu dem in Fig. 4 geschilderten Ablauf, wobei die Anwendungsserver 10 jeweils beim Login des Benutzers 2 den Authentifizierungs-Server 4 anfragen, und der Profilserver 11 analog die Daten von dem Authentifizierungs-Server 4 bezieht.

## Patentansprüche

1. Vorrichtung zur automatischen Konfiguration von Benutzerprofilen bei Endgeräten (6, 8) in einem Telekommunikations- und/oder Datennetz mit einer Vielzahl von Anwendungsservern (10), und einem Profilserver (11) zur Verwaltung, Speicherung und Aktualisierung der Benutzerprofile,
wobei der Profilserver eingerichtet ist, Benutzerdaten von den Anwendungsservern zu empfangen,
wobei der Profilserver (11) eine Synchronisationseinheit (14a) zur Synchronisation zwischen dem Profilserver (11) und der Vielzahl von Anwendungsservern (10) aufweist; und
wobei der Profilserver (11) dazu eingerichtet ist, Cache-Dateien und personalisierte Client-Programme zu verwalten und einen wirklich benötigten, personalisierten Teil einer Applikation auf ein mobiles Endgerät zu übertragen.

2. Vorrichtung nach Anspruch 1, **dadurch gekennzeichnet, dass** der Profilserver (11) eine Duplizierungsseinheit (14b) zur Spiegelung der Benutzerprofile aller Benutzer (2) von den Anwendungsservern (10) und/oder von Cache-Dateien aller Benutzer (2) von den Endgeräten (6 bzw. 8) auf den Profilserver (11) beinhaltet.

3. Vorrichtung nach Anspruch 1 oder 2, **dadurch gekennzeichnet, dass** der Profilserver (11) Benutzeridentitäten eines Benutzers (2) in verschiedenen Netzen aufeinander abbildet, insbesondere zum Zwecke der Synchronisation oder Duplizierung.

4. Vorrichtung nach einem der Ansprüche 1 bis 3, **dadurch gekennzeichnet, dass** der Profilserver (11) eine Profilverwaltungseinheit (13) zur Verwaltung von Benutzerprofilen, zur Speicherung von aktuellen Benutzerdaten und nutzerangepassten Programmteilen und/oder zur Aktualisierung der Cache-Dateien der Benutzer (2) aufweist.

5. Vorrichtung nach einem der Ansprüche 1 bis 4, **dadurch gekennzeichnet, dass** der Profilserver (11) Benutzerprofile der Benutzer (10) und/oder Zugangsdaten für verschiedene Anwendungen der Anwendungsserver (10) von einem speziellen Authentifizierungs Server (4) erhält und verwaltet.

6. Verfahren zur automatischen Konfiguration von Benutzerprofilen auf Endgeräten (6,8), mit den Schritten:
(a) Übergabe eines Benutzerprofils eines Benutzers (2) auf einem Endgerät (6, 8) von einem Anwendungsserver (10) an einen Profilserver (11),
(b) Installation der benutzerspezifischen Komponenten von Anwendungsprogrammen auf dem Endgerät (6, 8) des Benutzers (2) durch den Profilserver (11) und
(c) Synchronisation des Profilserver (11) mit der Vielzahl von Anwendungsservern (10); und
Verwalten von Cache-Dateien und personalisierte Client-Programme mittels des Profilservers.

7. Verfahren nach Anspruch 6, **dadurch gekennzeichnet, dass** vor dem Schritt (b) der Installation der benutzerspezifischen Komponenten von Anwendungsprogrammen auf dem Endgerät (6, 8) der Profilserver (11) Benutzeridentitäten des Benutzers (2) in verschiedenen Netzen aufeinander abbildet.

8. Verfahren nach Anspruch 6 oder 7, **dadurch gekennzeichnet, dass** der Schritt (a) der Übergabe des Benutzerprofiles an den Profilserver (11) insbesondere eine Spiegelung von standardmäßig genutzten Cache-Dateien des Benutzers (10) von dem Endgerät (6, 8) des Benutzers (2) auf den Profilserver (11) einschließt.

9. Verfahren nach einem der Ansprüche 6 bis 8, **dadurch gekennzeichnet, dass** der Schritt (b) der Installation der benutzerspezifischen Softwarekomponenten insbesondere eine Übergabe von standardmäßig genutzten Cache-Dateien des Benutzers (10) von dem Profilserver (11) auf das Endgerät (6, 8) des Benutzers (2) einschließt.

10. Verfahren nach einem der Ansprüche 6 bis 9, **dadurch gekennzeichnet, dass** der Schritt (a) der Übergabe des Benutzerprofils insbesondere eine Übergabe der von einem speziellen Authentifizierungs-Server (15) stammenden Zugangsdaten des Benutzers (10) für die Anwendungsprogramme der Anwendungsservern (10) an den Profilserver (11) einschließt.

11. Verfahren nach einem der Ansprüche 6 bis 10 **dadurch gekennzeichnet, dass** eine Authentifizierung eines Benutzers (2) über einen Anwendungsserver (10) erfolgt.

## Claims

1. Apparatus for automatically configuring user profiles in terminals (6, 8) in a telecommunications and/or data network having a multiplicity of application servers (10) and a profile server (11) for managing, storing and updating the user profiles,
the profile server being set up to receive user data from the application servers,
the profile server (11) having a synchronization unit (14a) for synchronization between the profile server (11) and the multiplicity of application servers (10); and
the profile server (11) being set up to manage cache files and personalized client programs and to transmit an actually required, personalized part of an application to a mobile terminal.

2. Apparatus according to Claim 1, **characterized in that** the profile server (11) comprises a duplication unit (14b) for mirroring the user profiles of all users (2) from the application servers (10) and/or cache files for all users (2) from the terminals (6 and 8) on the profile server (11).

3. Apparatus according to Claim 1 or 2, **characterized in that** the profile server (11) maps user identities of a user (2) in different networks to one another, in particular for the purpose of synchronization or duplication.

4. Apparatus according to one of Claims 1 to 3, **characterized in that** the profile server (11) has a profile management unit (13) for managing user profiles, for storing current user data and user-adapted program parts and/or for updating the cache files for the users (2).

5. Apparatus according to one of Claims 1 to 4, **characterized in that** the profile server (11) receives user profiles of the users (2) and/or access data for different applications of the application servers (10) from a special authentication server (4) and manages said user profiles and/or access data.

6. Method for automatically configuring user profiles on terminals (6, 8), having the following steps:
(a) a user profile of a user (2) on a terminal (6, 8) is transferred from an application server (10) to a profile server (11),
(b) the user-specific components of application programs are installed on the terminal (6, 8) belonging to the user (2) by the profile server (11), and
(c) the profile server (11) is synchronized with the multiplicity of application servers (10); and
cache files and personalized client programs are managed using the profile server.

7. Method according to Claim 6, **characterized in that**, before step (b) of installing the user-specific components of application programs on the terminal (6, 8), the profile server (11) maps user identities of the user (2) in different networks to one another.

8. Method according to Claim 6 or 7, **characterized in that** step (a) of transferring the user profile to the profile server (11) includes, in particular, mirroring cache files for the user (2), which are used as standard, from the terminal (6, 8) belonging to the user (2) to the profile server (11).

9. Method according to one of Claims 6 to 8, **characterized in that** step (b) of installing the user-specific software components includes, in particular, transferring cache files for the user (2), which are used as standard, from the profile server (11) to the terminal (6, 8) belonging to the user (2).

10. Method according to one of Claims 6 to 9, **characterized in that** step (a) of transferring the user profile includes, in particular, transferring the access data for the user (2) for the application programs of the application servers (10), which data come from a special authentication server (15), to the profile server (11).

11. Method according to one of Claims 6 to 10, **characterized in that** a user (2) is authenticated via an application server (10).

## Revendications

1. Dispositif de configuration automatique de profils d'utilisateurs sur des terminaux (6, 8) dans un réseau de télécommunication et/ou de données comportant une pluralité de serveurs d'applications (10) et un serveur de profils (11) pour la gestion, le stockage et la mise à jour des profils d'utilisateurs ;
le serveur de profils étant aménagé pour recevoir des données d'utilisateurs des serveurs d'applications ;
le serveur de profils (11) comportant une unité de synchronisation (14a) pour la synchronisation entre le serveur de profil (11) et la pluralité de serveurs d'applications (10), et
le serveur de profils (11) étant configuré pour gérer des fichiers de cache et des programmes clients personnalisés et pour transmettre à un terminal mobile une partie personnalisée et réellement requise d'une application.

2. Dispositif selon la revendication 1, **caractérisé en ce que** le serveur de profils (11) contient une unité de duplication (14b) pour créer une image, sur le serveur de profils (11), des profils d'utilisateurs de tous les utilisateurs (2) des serveurs d'applications (10) et/ou des fichiers de cache de tous les utilisateurs (2) des terminaux (6 resp. 8).

3. Dispositif selon la revendication 1 ou 2, **caractérisé en ce que** le serveur de profils (11) applique l'une sur l'autre des identités d'utilisateur d'un utilisateur (2) dans différents réseaux, en particulier aux fins de la synchronisation ou de la duplication.

4. Dispositif selon l'une des revendications 1 à 3, **caractérisé en ce que** le serveur de profils (11) comporte une unité de gestion de profils (13) pour gérer des profils d'utilisateurs, pour stocker des données d'utilisateurs actuelles et des parties de programmes adaptées aux utilisateurs et/ou pour mettre à jour les fichiers de cache des utilisateurs (2).

5. Dispositif selon l'une des revendications 1 à 4, **caractérisé en ce que** le serveur de profils (11) reçoit d'un serveur d'authentification spécial (4) et gère des profils d'utilisateurs des utilisateurs (10) et/ou des données d'accès pour différentes applications des serveurs d'applications (10).

6. Procédé de configuration automatique de profils d'utilisateurs sur des terminaux (6, 8), comportant les étapes suivantes :
(a) transfert d'un profil d'utilisateur d'un utilisateur (2) sur un terminal (6, 8) d'un serveur d'applications (10) à un serveur de profils (11) ;
(b) installation des composants, spécifiques aux utilisateurs, de programmes d'applications sur le terminal (6, 8) de l'utilisateur (2) par le serveur de profils (11) et
(c) synchronisation du serveur de profils (11) sur la pluralité de serveurs d'applications (10), et gestion de fichiers de cache et de programmes clients personnalisés au moyen du serveur de profils.

7. Procédé selon la revendication 6, **caractérisé en ce que**, avant l'étape (b) de l'installation des composants, spécifiques aux utilisateurs, de programmes d'applications sur le terminal (6, 8), le serveur de profils (11) applique l'une sur l'autre des identités d'utilisateur de l'utilisateur (2) dans différents réseaux.

8. Procédé selon la revendication 6 ou 7, **caractérisé en ce que** l'étape (a) du transfert du profil d'utilisateur au serveur de profils (11) inclut plus particulièrement une création d'image de fichiers de cache de l'utilisateur (10), utilisés de manière standard, par le terminal (6, 8) de l'utilisateur (2) sur le serveur de profils (11).

9. Procédé selon l'une des revendications 6 à 8, **caractérisé en ce que** l'étape (b) de l'installation des composants logiciels spécifiques aux utilisateurs inclut plus particulièrement un transfert de fichiers de cache de l'utilisateur (10), utilisés de manière standard, du serveur de profils (11) au terminal (6, 8) de l'utilisateur (2).

10. Procédé selon l'une des revendications 6 à 9, **caractérisé en ce que** l'étape (a) du transfert du profil d'utilisateur inclut plus particulièrement un transfert, au serveur de profils (11), des données d'accès de l'utilisateur (10) pour les programmes d'applications des serveurs d'applications (10) provenant d'un serveur d'authentification spécial (15).

11. Procédé selon l'une des revendications 6 à 10, **caractérisé en ce qu'**a lieu une authentification d'un utilisateur (2) via un serveur d'applications (10).
